# EUROPEAN PATENT SPECIFICATION

(11) **EP 4 544 165 B1**
(45) Date of publication and mention of the grant of the patent: **18.03.2026**
(21) Application number: 23730945.5
(22) Date of filing: 23.05.2023
(51) Int. Cl.: F02F 1/42, F02B 17/00, F02B 31/00

(54) **A HYDROGEN-FUELED INTERNAL COMBUSTION ENGINE WITH MASKING OF THE INTAKE VALVES**
WASSERSTOFFBETRIEBENE BRENNKRAFTMASCHINE MIT MASKIERUNG DER EINLASSVENTILE
MOTEUR À COMBUSTION INTERNE ALIMENTÉ EN HYDROGÈNE AVEC MASQUAGE DES SOUPAPES D'ADMISSION

(30) Priority: 27.06.2022 IT 202200013588
(43) Date of publication of application: 30.04.2025
(73) Proprietor: Stellantis Europe S.p.A., 10135 Torino (TO) (IT)
(72) Inventor: MAIORANA, Giovanni, 10135 Torino (IT); MUSU, Ettore, 41121 Modena (IT)
(74) Representative: Buzzi, Notaro & Antonielli d'Oulx S.p.A.
(86) International application number: PCT/IB2023/055288
(87) International publication number: WO 2024/003628

(56) References cited:
- EP-A1- 2 474 714
- JP-A- 2004 293 483
- JP-A- H10 252 477
- US-A1- 2006 266 328
- US-A1- 2019 323 417
- US-A1- 2022 154 630

## Description

### Field of the Invention

The present invention relates to hydrogen-fueled internal combustion engines. Specifically, the invention was developed with reference to hydrogen-fueled spark ignition internal combustion engines having an architecture derived from a diesel-fueled compression-ignition internal combustion engine.

### Prior Art

The current trend towards a massive reduction of carbon dioxide emissions into the atmosphere influences, on various levels, the production chain in the automotive industry, and requires each level to implement solutions - which were not previously envisaged - in order to comply with the increasingly strict regulations both on a national and on a European level.

The desired reduction of CO₂ emissions, down to a complete elimination thereof, requires i.a. the implementation of automotive systems which do not involve combustion (e.g., the systems equipping electric vehicles), or which employ carbon-free fuels such as hydrogen.

Among the main features of hydrogen combustion we may mention a very high resistance to detonation and a speed of the flame front which is much higher than in the case of the combustion of carbon-based fuel.

Such features lead to a high pressure peak during combustion, and therefore require a drive unit having a structure adapted to withstand the consequent mechanical stresses.

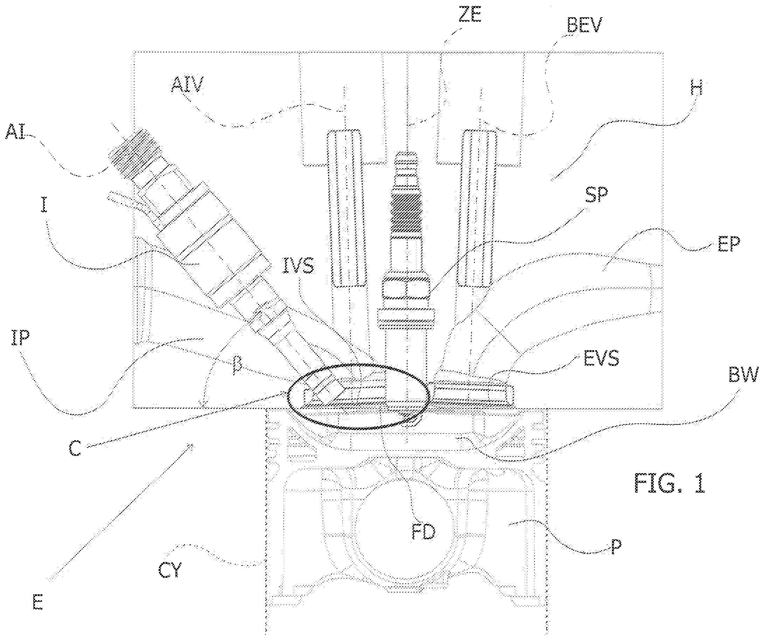

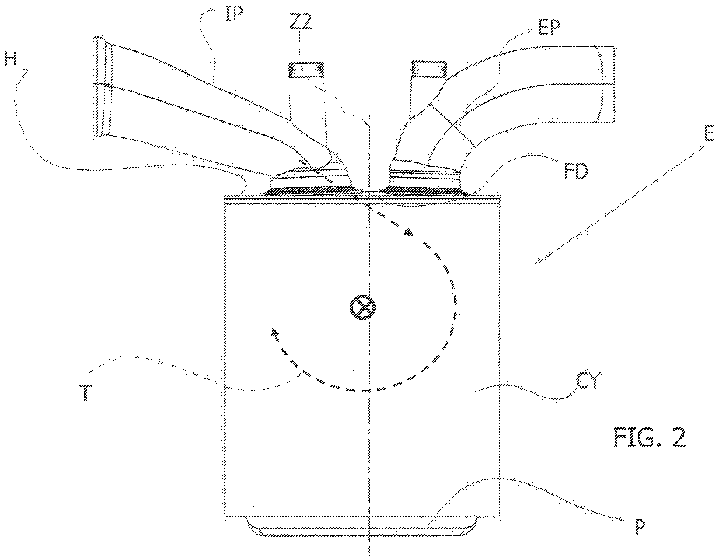

In this regard, the implementation of hydrogen-fueled engines having architectures derived from diesel drive units, or generally speaking from compression-ignition drive units, is particularly advantageous, because such drive units are generally sized in such a way as to withstand higher mechanical stresses than the equivalent spark-ignition drive units, therefore enabling maximizing the thermo-dynamic efficiency during hydrogen combustion. An example of a hydrogen-fueled internal combustion engine of the prior art, having an architecture derived from a compression-ignition internal combustion engine, is shown in Figures 1 and 2 with reference E. The engine E comprises a cylinder block including at least a cylinder CY, each cylinder having a longitudinal axis XE along which a piston P is movable with a reciprocating motion. Piston P comprises a circular depression BW, which provides a generally Heron-type combustion chamber. The engine E moreover comprises a head H comprising a coupling surface with the cylinder block (or head edge) and a flame deck FD for each cylinder 2. Head H moreover comprises a plurality of intake conduits, comprising a first intake conduit and a second intake conduit IP, and at least one exhaust conduit EP. Each intake conduit IP comprises an intake valve IV movable along a respective valve axis XIV between a closed position, wherein the intake valve is in contact with a valve seat IVS formed in the flame deck FD, and an open position, wherein the valve is separated from the valve seat and protrudes into the cylinder CY. Similarly, each exhaust conduit EP comprises an exhaust valve EV, movable along a respective valve axis XEV between a closed position, wherein the intake valve is in contact with a valve seat EVS on the flame deck FD, and an open position wherein the valve is separated from the valve seat and protrudes into cylinder CY.

The use of such architectures derived from diesel-cycle internal combustion engines for hydrogen-fueled engines, however, is not devoid of drawbacks.

First of all, the internal combustion engine E from which the architecture is derived is inherently under-optimized as regards the generation of a tumble motion (vortex T, Figure 2) of the charge within the cylinder.

Although it is possible to modify the geometry of the intake conduits, it is substantially impossible to resort to other interventions to further increase the generation of the tumble vortex, such as the so-called "masking" (or shielding) of the intake valves IV, so as to converge the air flow entering the cylinder onto the external surface of the valves, while preventing it from flowing along the intrados as much as possible.

As can be seen in Figure 1, the almost vertical arrangement of the valves IV, EV in the engine E, wherefrom the architecture is derived, makes masking impossible because of the substantially flat shape of the flame deck FD and of the approximate alignment thereof and of the valve seats IVS, EVS with the head edge, which does not offer enough room for the creation of a masking curtain.

Moreover, as commonly known, the valve masking is typically associated with a worse volumetric efficiency, because it affects the outflow area, due to the lifts corresponding to the height of the curtain which constitutes it.

In addition, the constraints due to the original architecture militate against the adoption of a variable timing device for the intake valves, because a modification of the timing may create interferences between the intake valves IV and the piston P.

Specifically, the area defined by circle C in Figure 1 shows that the very small distance between the valve seat IV and the piston P at the top dead centre almost inevitably causes interferences between the valves IV and the piston P when the effort is made to anticipate the opening of the intake valve, thereby increasing the lift thereof when the piston is at the top dead centre.

This is a serious limitation, because in hydrogen-fueled engines the injection of hydrogen into the cylinder takes place when the intake valves are closed or nearly closed, leaving a very short time for mixing: a variable timing device would be useful, in this regard, to achieve the best compromise between the maximum possible filling and the maximum possible mixing. US 2022/154630 A1 illustrates and exemplifies such an engine.

### Object of the Invention

The invention aims at solving the technical problems described in the foregoing. Specifically, the invention aims at providing a hydrogen-fueled spark-ignition internal combustion engine, having an architecture derived from a compression-ignition internal combustion engine, wherein it is possible to generate a tumble motion by resorting to a shielding (masking) of the intake valves without excessively modifying the geometry of the engine head. Moreover, the invention aims at enabling the use of a variable valve timing device without incurring in interference events between the piston and the intake valves.

### Summary of the Invention

The object of the present invention is achieved by means of an internal combustion engine having the features set forth in the claims that follow, which form an integral part of the technical disclosure provided herein in relation to the invention.

### Brief Description of the Figures

The invention will now be described with reference to the annexed Figures, provided by way of non-limiting example only, wherein:
- Figure 1 shows a hydrogen-fueled internal combustion engine of the prior art,
- Figure 2 shows the engine of Figure 1 and a diagram of the tumble motion,
- Figure 3 shows an internal combustion engine according to the invention,
- Figure 4 shows a head of the internal combustion engine of Figure 3,
- Figure 5 is a view according to arrow V of Figure 4,
- Figures 6 and 7 show a comparison of the operation of an engine of the prior art (Figure 6) and of an engine according to the invention (Figure 7),
- Figure 8 shows a head of the internal combustion engine according to a further embodiment of the invention,
- Figure 9 is a view according to arrow IX of Figure 8,
- Figures 10A and 10B show an advantageous aspect of the engine of Figure 9, while Figure 11 is a diagram showing the implications thereof,
- Figures 12 and 13A, 13B are equivalent to Figures 9 and 10A, 10B, but refer to a yet further embodiment of the invention,
- Figure 14 is a top view of the engine of Figures 13A, 13B,
- Figure 15 shows a head of the internal combustion engine according to a yet further embodiment of the invention, and
- Figure 16 is a view according to arrow XVI of Figure 15.

### Detailed Description

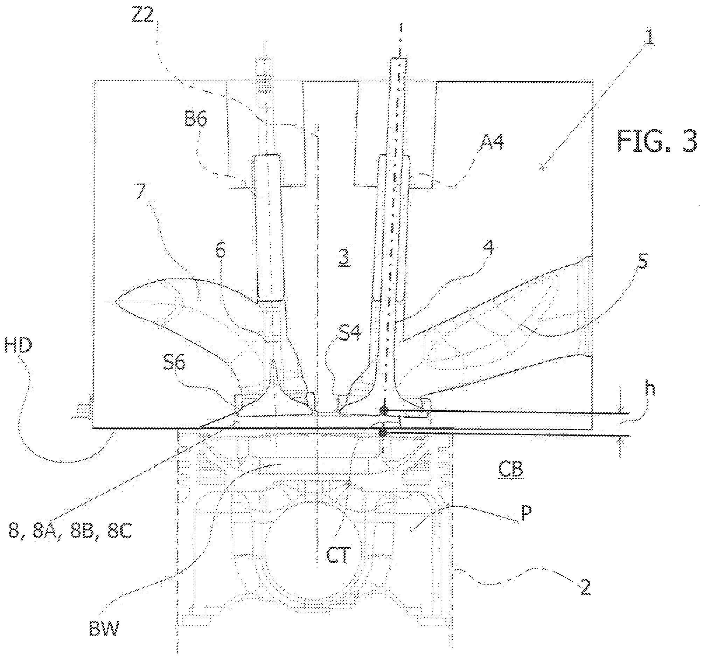

Reference number 1 in Figure 3 and in the following Figures generally denotes a hydrogen-fueled spark-ignition internal combustion engine according to the invention.

In various embodiments, the engine 1 comprises a cylinder block CB comprising at least one cylinder 2, each cylinder 2 having a longitudinal axis Z2 along which a piston P is movable with a reciprocating motion. The piston P comprises a circular depression BW which forms a combustion chamber of a general Heron type. The engine 1 moreover comprises a head 3 comprising a coupling surface HD with cylinder block CB (as it is generally known, a gasket is interposed between surface HD and cylinder block CB).

The head 3 moreover comprises, for each cylinder 2, a pair of intake valves 4 which are movable along (parallel) valve axes A4, each intake valve being inserted in a respective intake conduit 5, and a pair of exhaust valves 6 which are movable along (parallel) valve axes B6, each exhaust valve being inserted in a respective intake conduit 7.

For each cylinder 2 and for each set of intake and exhaust valves 4, 6 associated thereto, the head 3 comprises, according to the invention, a flame deck 8 which is recessed within the head 3, so as to form a depression with respect to surface HD. The flame deck 8 faces the respective cylinder 2, thereby defining a combustion chamber together with piston P.

Each intake valve 4 is movable along the respective valve axis A4 between a closed position, wherein the intake valve is in contact with a valve seat S4 formed on the flame deck 8, and an open position wherein valve 4 is separated from the valve seat S4 and protrudes into the flame deck 8. In the same way, each exhaust valve 6 is movable along the respective valve axis B6 between a closed position, wherein the intake valve is in contact with a valve seat S6 formed in the flame deck 8, and an open position wherein the valve 4 is separated from the valve seat 4 and protrudes into the flame deck 8.

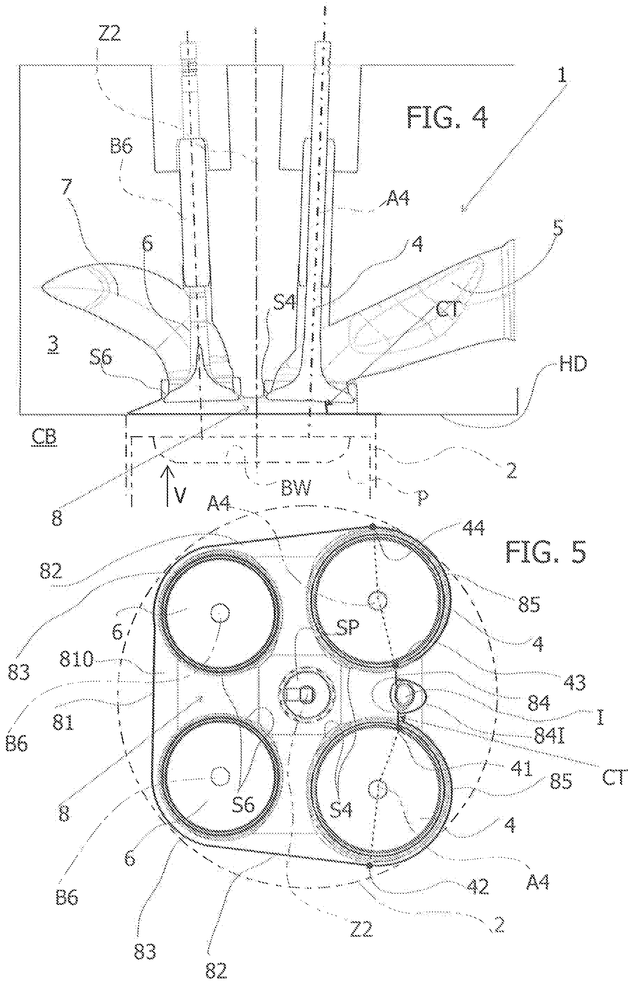

Specifically, the flame deck 8 forms a depression, within head 3, which is substantially concentrated in the area of valves 4, 6. It will be observed, for example in Figure 5, that the superposition of the contour of cylinder 2 to the flame deck 8 highlights the fact that the volumes of the latter are concentrated in a more circumscribed area with respect to the perimeter of the cylinder 2.

A spark plug SP is arranged centrally with respect to the cylinder (and therefore in a position between valves 4 and 6); in other words, it is arranged coaxially with axis Z2 or with a slight eccentricity with respect to axis Z2. A hydrogen injector I is arranged similarly to what has been observed for engine E, i.e., in a position between the intake conduits 5, and has a longitudinal axis AI which is inclined by an angle β with respect to surface HD, or generally with respect to a plane orthogonal to axis Z2. The angle β is preferably equal to or greater than 40°.

According to the invention, the head 3 moreover comprises a curtain CT, which extends across the depression of each flame deck 8 at least around a first portion of the valve seat S4 of the first intake valve 4 and around a second portion of the valve seat S4 of the second intake valve 4.

Preferably, the curtain CT moreover extends in a position between the valve seats S4 of the first intake valve 4 and of the second intake valve 4.

The curtain CT extends on one single side with respect to the valve axes A4, i.e., it extends in a position between the valve axes A4 and the wall of cylinder 2, or in other words in a position corresponding to an intrados of the intake valves 4.

Referring to Figures 4 and 5, in a first embodiment the depression of the flame deck 8 has a perimeter (referred to the plane of the coupling surface HD) which comprises a first side 81 arranged adjacent to the exhaust valves 6, two second sides each facing a set of an intake valve 4 and an exhaust valve 6 (and which therefore diverge towards the intake valves, if the latter have a greater diameter), two contour sections 83 between side 81 and sides 82, wherein each contour section 83 substantially follows the profile of the valve seat S6 with a radial distance therefrom, and a fourth side 84 extending between the two intake valves 4 and intersecting the tip of injector I.

To this end, the side 84 comprises a section 840 having the general shape of an inverted "U", in order to accommodate the tip of injector I. The side 84 is connected to the sides 82 by means of a pair of contour sections 85 which, similarly to the contour sections 83, substantially follow the profile of the valve seat S4 at a distance therefrom. Unlike contour sections 83, which join each other tangentially (or substantially tangentially) to the sides 81 and 82, the contour sections 85 join each other tangentially (or substantially tangentially) only to sides 82, while the junction to side 84 forms an apex. The perimeter of the depression in the flame deck 8 is globally heart-shaped.

The junction points of contour sections 85 to the sides 82 and 84 are denoted by the reference numbers 41, 42 and 43, 44 (two for each valve seat S4): the sequence of contour section 85 - side 84 - contour section 85 which develops from point 41 to point 44 passing through the other points 42, 43 defines a root and a crest of the curtain CT, because in this embodiment it extends substantially parallel to axis Z2 across a depth h of the depression of flame deck 8.

In other words, the curtain CT extends around the first portion of the valve seat S4 of the first intake valve 4, and around the second portion of the valve seat S4 of the second intake valve 4, along an arc trajectory developing between a first end (corresponding to the points 41, 43) to a second end (corresponding to the points 42, 44) around the corresponding valve axis A4.

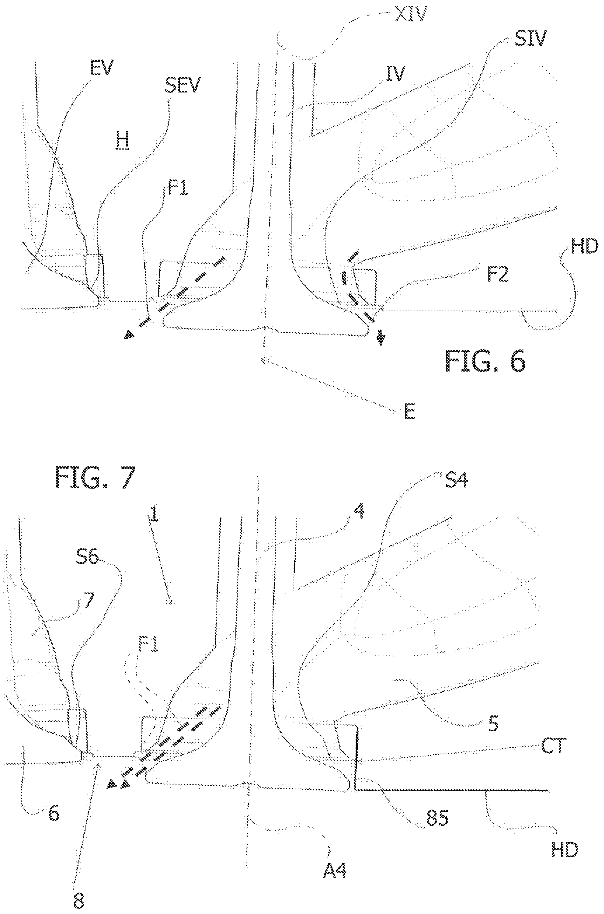

Figures 6 and 7 show a comparison between the engine E of the prior art and the engine 1 according to the invention, specifically according to the embodiment of Figures 3 to 5. The intake valves IV and 4 are shown with the same lift from the valve seats IVS and S4. In the case of engine E, the absence of a masking on the intrados of valve IV causes both a flow F1, which develops on the external surface of valve IV and which contributes to the generation of the tumble motion T, and a flow F2, which develops on the intrados of valve IV and which hinders the flow F1 from generating the tumble motion T. In other words, the tumble motion is partially destroyed by flow F2, which generates a flow field having a speed distribution which substantially opposes the flow field generated by flow F1. On the contrary, in the engine 1 the presence of the curtain CT at the intrados of the valves 4 reduces or eliminates flow F2, by masking the intrados of the valves 4. Even when the valve 4 is in an open condition, the curtain CT forms an "extension" of the walls of the valve seat S4 only at the intrados of the valve 4, thus blocking the transit of air coming from the intake conduit.

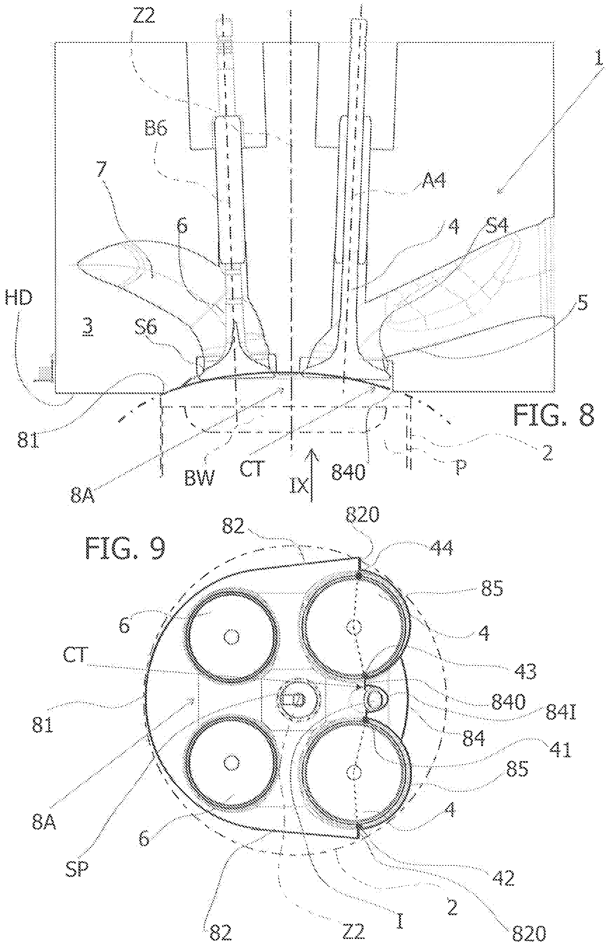

Figures 8-11, 12-14 and 15-16 show further embodiments of engine 1, which differ from each other in the geometry of the flame deck 8; therefore, the latter is respectively denoted as 8A, 8B, 8C. Each of these embodiments envisages a curtain CT having a different shape from curtain CT of Figures 4, 5; specifically, these shapes lead to variable masking effects with the lift of the intake valves 4.

Before describing such further embodiments, it must be remarked that the need may be felt to find a compromise between the generation of a tumble motion and the filling of the cylinder, and/or to achieve a tumble motion having more advanced characteristics than a single macro-vortex as shown in Figure 2, and/or to accommodate for timing variations of the intake valves which may lead to different conditions of potential interference between the intake valves 4 and the piston P.

For example, a flow field as shown in Figure 7 is optimal as regards the generation of a tumble motion with a single vortex, but - especially in the range of the crank angle degrees wherein the tumble motion is completely developed - the substantial elimination of flow F2 may cause a slightly reduced filling of cylinder 2. Moreover, a masking effect as shown in the Figures 4, 5 and 7 may not be able to support the generation of tumble motions having for example an omega shape.

In this regard, the masking effect brought about by the curtain CT of Figures 4, 5 and 7 may be further modulated to meet such needs.

Referring to Figures 8 and 9, the flame deck 8A differs from flame deck 8 as it defines a depression having a substantial barrel shape, with an axis extending between the intake valves 4 and the exhaust valves 6. Such a geometry, moreover, leads to a different shape of curtain CT. The perimeter of the depression (with reference to the plane of the coupling surface HD) comprises, on the side of the exhaust valves 6, one single first curved side 81 arranged adjacent to the exhaust valves 6, and joined tangentially or substantially tangentially to the two second sides 82, each of which faces a set of an intake valve 4 and an exhaust valve 6 (and which therefore diverge towards the intake valves, if the latter have a greater diameter, as in the Figure). The fourth side 84 extends between the two intake valves 4 and is arranged between a pair of contour section 85 which substantially follow the profile of the valve seat S4 at a distance therefrom. It shall be borne in mind, however, that also in the present embodiment the side 81 may have a straight development, as in the case of Figures 3 to 7 - by inserting the joining sections 83 again - or it may show a concavity oriented outwards, so as to "wrap", together with the joining sections 83, the exhaust valves.

Unlike flame deck 8, the contour sections 85 join at an apex both to side 84 and to segments 820, which in turn define an apex with sides 82. It will be observed, moreover, that due to the substantial barrel-shaped geometry of the depression of flame deck 8, the curtain CT extends between a root 840 (whereat there are located the "U"-shaped section 84I and the injector tip) and the side 84, and it equally shows a barrel-shaped geometry.

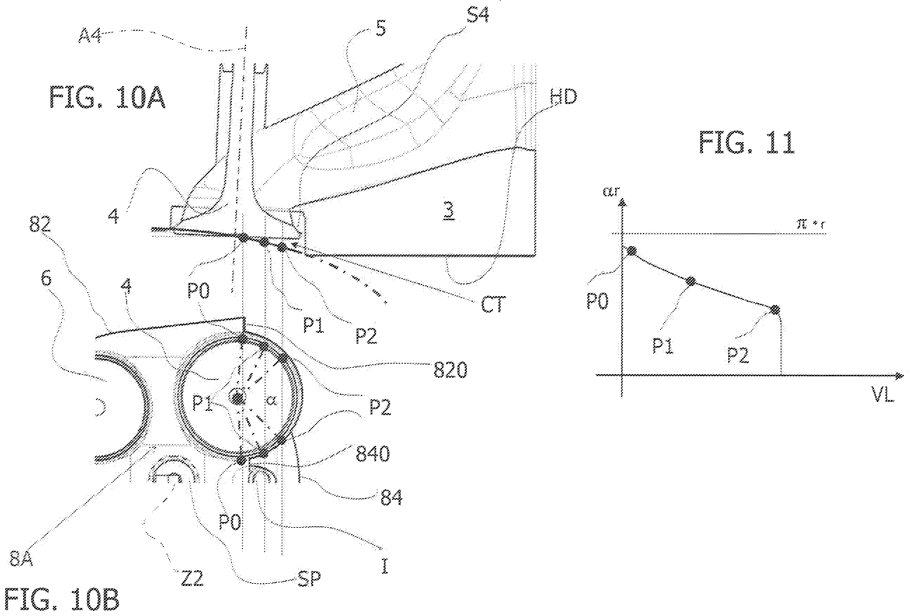

Figures 10A, 10B and 11 show the effect of the geometry of flame deck 8A in the interaction with the valves 4, in order to achieve a masking of the latter.

Generally speaking, in the flame deck 8A, a circumferential distance between the first ends 41, 43 and the second ends 42, 44 of the arc trajectories decreases while progressing along said curtain CT in a direction away from the valve seat S4 (i.e., it decreases as the lift of valve 4 increases). In this embodiment, the reduction of the distance of said first end 41, 43 from the second end 42, 44 takes place symmetrically with respect to a centreline of the arc trajectory along which curtain CT develops.

In this regard, the diagram defined by both Figures 10A and 10B shows the evolution of the position of the end points of curtain CT around the valve seats S4 when the distance from the valve seat S4 changes, i.e., as the lift of valve 4 progresses.

The three points P0, P1, P2 show the position of the ends 41, 42 and 43, 44 of curtain CT in front of which the edge of the valve plate of valve 4 sequentially passes (P0, P1, P2) during a movement from the closed condition towards the open condition (towards maximum lift). As the reduction of the distance takes place symmetrically (or substantially symmetrically) with respect to the centreline of curtain CT, the points P0, P1, P2 are aligned astride the centreline of curtain CT along planes orthogonal to the surface HD, and extending to intersect both intake valves 4.

The angle α indicates the circumferential extension of the arc trajectory along which curtain CT develops at the various distances from seat S4, while r denotes the radius of the valve seat S4 (which in turn corresponds to a radius of the valve plate).

The diagram in figure 11 shows the value of the arc (α·r) covered by curtain CT as the valve lift VL progresses. As can be observed, in a condition of zero lift (the valve 4 is closed), the arc covered by curtain CT approaches a semi-circumference. Therefore, the lift of valve 4 starts (points P0) with a maximum masking by curtain CT, so as to use all the air entering from the intake conduit 5 for the flow F1 and for the generation of the tumble motion.

Progressively, the arc covered by the curtain CT reduces its width (transit in front of points P1) to a minimum and nearly to zero (transit in front of points P2). This means that, as the lift progresses, a passage gradually opens for the flow F2 on the intrados of valve 4, in addition to the flow F2 on the external surface. This leads to increasing the filling of the cylinder, by introducing flow F2 at an instant when the energy of the tumble motion is more than sufficient for the latter to be maintained, despite the moderate contrary action of flow F2. With the transit in front of, and past point P2, flow F2 may thus be completely enabled without risking a dissipation of the tumble motion, and the filling of the cylinder may be further increased. In this way it is possible to meet two potentially contrasting needs.

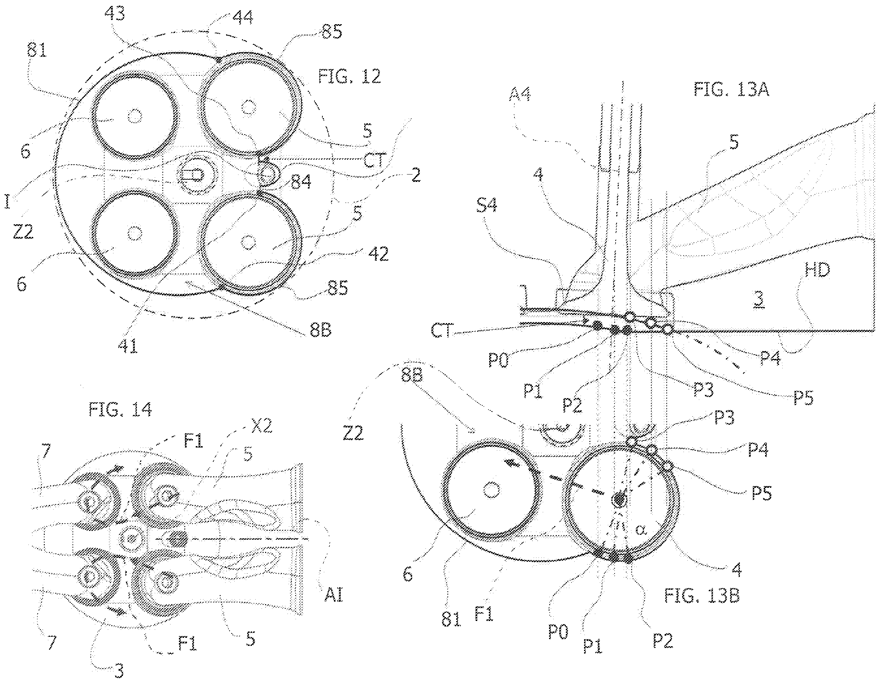

Referring to Figures 12 to 14, the flame deck 8B geometrically differs from the flame decks 8 and 8A because it comprises a curtain CT with asymmetric masking of the intake valve. In other words, the masking effect is different on areas of the intrados of valve 4 which are arranged on opposed sides of axis A4, although it remains concentrated essentially on the intrados of the intake valve 4.

Referring to Figure 12, the perimeter of flame deck 8B only comprises the sides / contour sections 81, 84, 85. In this embodiment, the set of the sides 81, 82 (and of the possible contour sections 83) provided for deck frame 8 and deck frame 8A becomes a single arc 81 which extends between points 41 and 44 and directly joins, forming an apex, the contour sections 85. The side 84 joins, again forming an apex, the contour sections 85, and defines a crest of curtain CT. As can be seen in Figures 13A and 13B (which have the same meaning as Figures 10A and 10B), the flame deck 8B defines a depression having a substantially spherical geometry.

The geometry of flame deck 8B is such that the valve 4 is shielded asymmetrically with respect to axis A4. In other words, a distance reduction of the first end 41, 43 with respect to the second end 42, 44 occurs asymmetrically with respect to the centreline of said arc trajectory along which curtain CT develops.

Referring to Figures 13A, 13B, the evolution of the position of ends 41, 43 and 42, 44 as the valve lift VL progresses is described by respective series of points (in the example, two triplets of points P0, P1, P2 for the second end and P3, P4, P5 for the first end) which are not aligned astride the centreline of curtain CT along parallel planes which are orthogonal to the surface HD and extend to intersect both intake valves 4. Therefore, the points P0, P3 correspond to a first lift, the points P1, P4 correspond to a second lift, which is higher than the first lift, and the points P3, P5 correspond to a third lift, which is higher than the second lift, and the points of a triplet and the corresponding points of the other triplet (i.e. the points at the same lift) are never contained in the same plane as the pencil of parallel planes mentioned in the foregoing.

With reference to Figure 13B, it may be observed that the opening angle α of curtain CT around each intake valve 4 is reduced at a higher rate in the areas between the intake valves 4 (i.e., between the first ends and the centreline), while the areas external to the intake valves 4, i.e. between the second ends and the centreline) exhibit a reduction at a lesser rate: we may compare, for example, the reduction of angle α obtained (with the same lift increase) in the passage from point P3 to point P4, and the reduction obtained in the passage from point P0 to point P1. The former is greater than the latter. This means that the masking is reduced more markedly in the areas between the two valve axes A4, thus creating a pair of flows F1 which converge towards the centre of cylinder 2. This leads, as is commonly known, to the generation of a so-called "omega-shaped" tumble motion, due to the development of the flow lines not only in the direction of the generation of a macro-vortex having an axis transversal to axis Z2, as shown in Figure 2, but also in the direction of a bifurcation upstream of the macro-vortex, according to an omega-shaped geometry, as can be seen in Figure 14. This kind of organized motion of the charge in cylinder 1 improves the mixing of air and fuel.

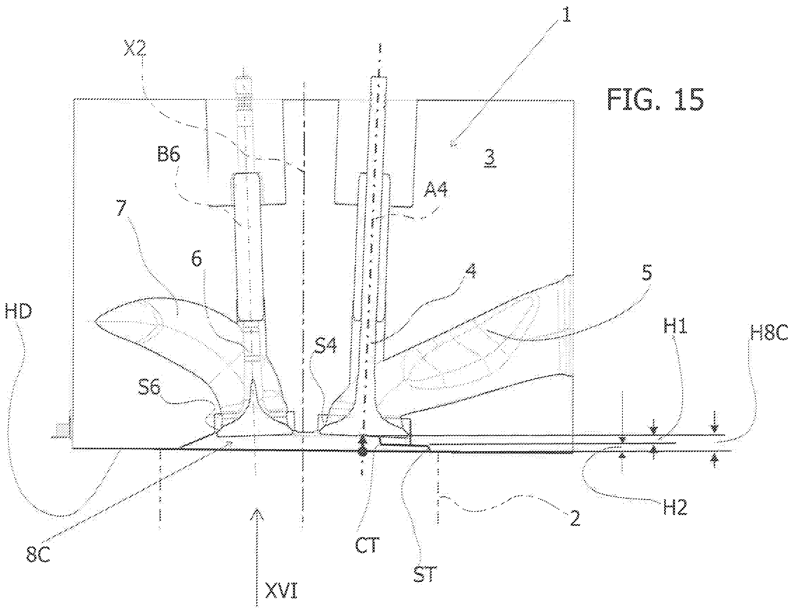

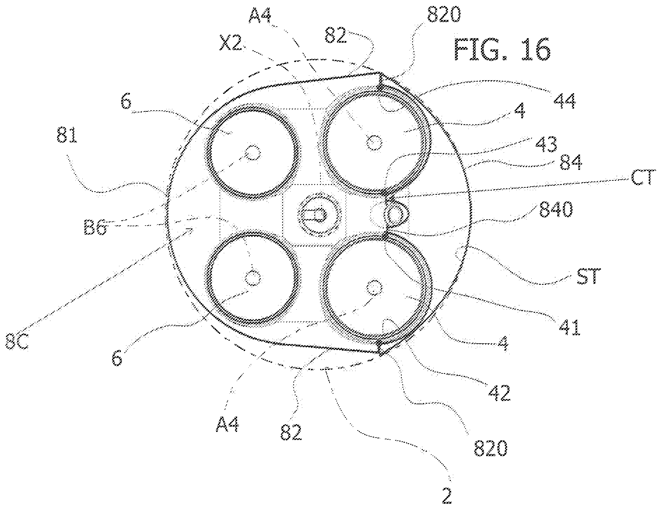

Referring to Figures 15 and 16, the flame deck 8C shares the same perimeter shape as flame deck 8A, but in this embodiment the side 840 extends as far as the perimeter of cylinder 2. Moreover, as can be seen in Figure 15, the depression defined by the flame deck 8C comprises two notable heights, a height H1 which corresponds to the height of curtain CT, and a height H2 which corresponds to a distance between the crest of the curtain CT and the surface HD. In other words, the crest of curtain CT, which extends as a substantially vertical wall which is parallel to axis Z2, is defined by side 840, while between the side 840 and the side 84 a plateau is obtained which finally slopes towards surface HD. The set of heights H1 and H2 corresponds to a height H8C, which is the maximum depth of the depression of flame deck 8C available for the intake valve 4.

In this embodiment, the depth of the depression of flame deck 8C is used in two different ways: the height H1 is used for masking and for supporting the generation of the tumble motion T, while the height H2 offers a further volume (by means of a step ST with respect to surface HD) for the movement of valves 4, which may accommodate possible timing modification provided by a variable valve timing device, definitely excluding a collision with piston P.

According to the invention it is therefore possible - practically by recessing the surfaces of the flame deck 8, 8A, 8B, 8C with respect to the surface HD - to create a volume to accommodate the movement of the intake valves without risking a collision with piston P, and at the same time it is possible to obtain a masking/masking which favours the generation of a tumble motion. This avoids a costly and sometimes harmful machining of piston P in order to obtain pockets or vents for the movement of the intake valves; such machining weakens the piston by creating protruding edges and recessed notches, which also damage the organized motions of the charge in cylinder 2. Specifically, a charge having an organized tumble motion repeatedly contacts piston P, and the presence of protruding edges and recessed notches only leads to dissipating a part of the tumble motion, therefore reducing the intensity thereof in the steps of preparation of the mixture and of triggering the combustion and the propagation of the flame front.

Additionally, by obtaining more volume for the combustion chamber within head 3, thanks to the depression defined by flame deck 8, it is moreover possible to reduce the volume of depression BW on the flame deck of piston P, in comparison with the engine E of the prior art, by obtaining values of the compression ratio (at least) as high as in engine E, without running the risk of a collision between the valves and the piston P.

Of course, the implementation details and the embodiments may amply vary with respect to what has been described and illustrated in the foregoing, without departing from the extent of the present invention, as defined in the annexed claims.

## Claims

1. A hydrogen-fueled spark-ignition internal combustion engine (1; 1') comprising
- a cylinder block comprising at least one cylinder (2), each cylinder (2) having a longitudinal axis (Z2) along which a piston (P) is movable with a reciprocating motion
- a cylinder head (3) comprising a coupling surface with said cylinder block (CB) and a flame deck (8; 8A, 8B, 8C) for each cylinder (2), each flame deck (8; 8A, 8B, 8C) being recessed within said head (3) with respect to said coupling surface (HD), thereby defining a depression, and facing said cylinder (2) thereby defining a combustion chamber with said piston (P), said cylinder head (3) further comprising a first intake conduit (5) and a second intake conduit (5), and at least one exhaust conduit (7), the first intake conduit (5) comprising a first intake valve (4), and the second intake conduit (4) comprising a second intake valve (4), each intake valve (4) being movable along a respective valve axis (A4) between a closed position wherein the intake valve (4) is in contact with a respective valve seat (S4) formed in the depression defined by the respective flame deck (8; 8A, 8B, 8C), and an open position wherein the intake valve (4) is separated from said valve seat (S4) and protrudes within the depression defined by the respective flame deck (8; 8A, 8B, 8C), the cylinder head (3) further comprising a curtain (CT) extending through the depression of each respective flame deck (8; 8A, 8B, 8C) at least around a first portion of the valve seat (S4) of the first intake valve (4) and around a second portion of the valve seat (S4) of the second intake valve (4),
wherein said curtain (CT) extends around the first portion of the valve seat (S4) of the first intake valve (4) and the second portion of the valve seat (S4) of the second intake valve (4) along an arc trajectory extending from a first end (41, 43) to a second end (42, 44) around the corresponding valve axis (A4),
wherein a circumferential distance between the first ends (41, 43) and the second ends (42, 44) of the arc trajectories decreases proceeding along said curtain (CT) away from the valve seat (S4).

2. The engine (1) according to claim 1, wherein said curtain (CT) further extends in a position between the valve seats (S4) of the first intake valve (4) and the second intake valve (4).

3. The engine (1) according to claim 1, wherein a decrease in distance of said first end (41, 43) with respect to said second end occurs symmetrically with respect to a center point of said arc trajectory.

4. The engine (1) according to claim 1, wherein a decrease in distance of said first end (41, 43) with respect to said second end occurs asymmetrically with respect to a center point of said arc trajectory.

5. The engine (1) according to claim 4, wherein a decrease in distance of said first end (41, 43) with respect to said second end occurs at a greater rate between said second end and a center point of said arched trajectory than the rate at which it is occurs between said first end and a center point of said arched trajectory.

6. The engine (1) according to any one of claims 1 to 5, wherein said curtain (CT) extends across the entire depth of the depression defined by said flame deck (8; 8A, 8B)

7. The engine (1) according to any one of claims 1 to 5, wherein said curtain (CT) extends for part of the depth of the depression defined by said flame deck (8C)

8. The engine (1) according to any one of the preceding claims, further comprising a hydrogen injector (16) arranged in a position between said first intake conduit (5) and said second intake conduit (5), and a spark plug (SP) arranged in a position central to said cylinder (2), said injector having a longitudinal axis (AI) preferably inclined at an angle of 40° or more with respect to the coupling surface (HD) of said head (3).

## Patentansprüche

1. Mit Wasserstoff betriebener fremdgezündeter Verbrennungsmotor (1; 1'), umfassend
- einen Zylinderblock, der mindestens einen Zylinder (2) umfasst, wobei jeder Zylinder (2) eine Längsachse (Z2) aufweist, entlang der ein Kolben (P) mit einer Hin- und Herbewegung bewegbar ist,
- einen Zylinderkopf (3), der eine Verbindungsfläche zum Zylinderblock (CB) und ein Flammdeck (8; 8A, 8B, 8C) für jeden Zylinder (2) umfasst, wobei jedes Flammdeck (8; 8A, 8B, 8C) innerhalb des Kopfs (3) gegenüber der Verbindungsfläche (HD) vertieft ist, wodurch eine Vertiefung definiert wird, und dem Zylinder (2) zugewandt ist, wodurch ein Brennraum mit dem Kolben (P) definiert wird, wobei der Zylinderkopf (3) ferner ein erstes Saugrohr (5) und ein zweites Saugrohr (5) sowie mindestens ein Abgasrohr (7) umfasst, wobei das erste Saugrohr (5) ein erstes Einlassventil (4) umfasst und das zweite Saugrohr (5) ein zweites Einlassventil (4) umfasst, wobei jedes Einlassventil (4) entlang einer jeweiligen Ventilachse (A4) zwischen einer geschlossenen Stellung, in der das Einlassventil (4) mit einem jeweiligen Ventilsitz (S4) in Kontakt ist, der in der Vertiefung, die durch das jeweilige Flammdeck (8; 8A, 8B, 8C) definiert wird, ausgebildet ist, und einer geöffneten Stellung bewegbar ist, in der das Einlassventil (4) von dem Ventilsitz (S4) gelöst ist und in der Vertiefung vorsteht, die durch das jeweilige Flammdeck (8; 8A, 8B, 8C) definiert wird,
wobei der Zylinderkopf (3) ferner eine Schürze (CT) umfasst, die sich durch die Vertiefung von jedem jeweiligen Flammdeck (8; 8A, 8B, 8C) mindestens um einen ersten Abschnitt des Ventilsitzes (S4) des ersten Einlassventils (4) und um einen zweiten Abschnitt des Ventilsitzes (S4) des zweiten Einlassventils (4) erstreckt,
wobei sich die Schürze (CT) um den ersten Abschnitt des Ventilsitzes (S4) des ersten Einlassventils (4) und den zweiten Abschnitt des Ventilsitzes (S4) des zweiten Einlassventils (4) entlang einer Bogenbahn erstreckt, die sich von einem ersten Ende (41, 43) zu einem zweiten Ende (42, 44) um die entsprechende Ventilachse (A4) erstreckt,
wobei ein zirkumferenzieller Abstand zwischen den ersten Enden (41, 43) und den zweiten Enden (42, 44) der Bogenbahnen entlang der Schürze (CT) weg vom Ventilsitz (S4) fortschreitend abnimmt.

2. Motor (1) nach Anspruch 1, wobei sich die Schürze (CT) ferner in eine Position zwischen den Ventilsitzen (S4) des ersten Einlassventils (4) und des zweiten Einlassventils (4) erstreckt.

3. Motor (1) nach Anspruch 1, wobei eine Abnahme des Abstands des ersten Endes (41, 43) in Bezug auf das zweite Ende symmetrisch zu einem Mittelpunkt der Bogenbahn vor sich geht.

4. Motor (1) nach Anspruch 1, wobei eine Abnahme des Abstands des ersten Endes (41, 43) in Bezug auf das zweite Ende asymmetrisch zu einem Mittelpunkt der Bogenbahn vor sich geht.

5. Motor (1) nach Anspruch 4, wobei sich der Abstand des ersten Endes (41, 43) in Bezug auf das zweite Ende zwischen dem zweiten Ende und einem Mittelpunkt der gebogenen Bahn stärker verringert als zwischen dem ersten Ende und einem Mittelpunkt der gebogenen Bahn.

6. Motor (1) nach einem der Ansprüche 1 bis 5, wobei sich die Schürze (CT) über die gesamte Tiefe der Vertiefung erstreckt, die durch das Flammdeck (8; 8A, 8B) definiert wird.

7. Motor (1) nach einem der Ansprüche 1 bis 5, wobei sich die Schürze (CT) über einen Teil der Tiefe der Vertiefung erstreckt, die durch das Flammdeck (8C) definiert wird.

8. Motor (1) nach einem der vorhergehenden Ansprüche, ferner umfassend einen Wasserstoff-Injektor (16), der in einer Position zwischen dem ersten Saugrohr (5) und dem zweiten Saugrohr (5) angeordnet ist, und eine Zündkerze (SP), die in einer zum Zylinder (2) mittigen Position angeordnet ist, wobei der Injektor eine Längsachse (AI) aufweist, die vorzugsweise in einem Winkel von 40° oder mehr zur Verbindungsfläche (HD) des Kopfs (3) geneigt ist.

## Revendications

1. Moteur à combustion interne à allumage par étincelle alimenté en hydrogène (1 ; 1') comprenant
- un bloc-cylindres comprenant au moins un cylindre (2), chaque cylindre (2) ayant un axe longitudinal (Z2) le long duquel un piston (P) est mobile avec un mouvement alternatif
- une culasse (3) comprenant une surface d'accouplement avec ledit bloc-cylindres (CB) et un pare-flamme (8 ; 8A, 8B, 8C) pour chaque cylindre (2), chaque pare-flamme (8 ; 8A, 8B, 8C) étant en retrait dans ladite culasse (3) par rapport à ladite surface d'accouplement (HD), définissant ainsi une dépression, et faisant face audit cylindre (2), définissant ainsi une chambre de combustion avec ledit piston (P), ladite culasse (3) comprenant en outre un premier conduit d'admission (5) et un second conduit d'admission (5), et au moins un conduit d'échappement (7), le premier conduit d'admission (5) comprenant une première soupape d'admission (4), et le second conduit d'admission (4) comprenant une seconde soupape d'admission (4), chaque soupape d'admission (4) étant mobile le long d'un axe de soupape respectif (A4) entre une position fermée dans laquelle la soupape d'admission (4) est en contact avec un siège de soupape respectif (S4) formé dans la dépression définie par le pare-flamme respectif (8 ; 8A, 8B, 8C) , et une position ouverte dans laquelle la soupape d'admission (4) est séparée dudit siège de soupape (S4) et fait saillie dans la dépression définie par le pare-flamme respectif (8 ; 8A, 8B, 8C),
la culasse (3) comprenant en outre un rideau (CT) s'étendant à travers la dépression de chaque pare-flamme respectif (8 ; 8A, 8B, 8C) au moins autour d'une première partie du siège de soupape (S4) de la première soupape d'admission (4) et autour d'une seconde partie du siège de soupape (S4) de la seconde soupape d'admission (4),
dans lequel ledit rideau (CT) s'étend autour de la première partie du siège de soupape (S4) de la première soupape d'admission (4) et de la seconde partie du siège de soupape (S4) de la seconde soupape d'admission (4) le long d'une trajectoire en arc s'étendant d'une première extrémité (41, 43) à une seconde extrémité (42, 44) autour de l'axe de soupape correspondant (A4),
dans lequel une distance circonférentielle entre les premières extrémités (41, 43) et les secondes extrémités (42, 44) des trajectoires en arc diminue en s'éloignant du siège de soupape (S4) le long dudit rideau (CT).

2. Moteur (1) selon la revendication 1, dans lequel ledit rideau (CT) s'étend en outre dans une position entre les sièges de soupape (S4) de la première soupape d'admission (4) et de la seconde soupape d'admission (4).

3. Moteur (1) selon la revendication 1, dans lequel une diminution de la distance de ladite première extrémité (41, 43) par rapport à ladite seconde extrémité se produit de manière symétrique par rapport à un point central de ladite trajectoire en arc.

4. Moteur (1) selon la revendication 1, dans lequel une diminution de la distance de ladite première extrémité (41, 43) par rapport à ladite seconde extrémité se produit de manière asymétrique par rapport à un point central de ladite trajectoire en arc.

5. Moteur (1) selon la revendication 4, dans lequel une diminution de la distance de ladite première extrémité (41, 43) par rapport à ladite seconde extrémité se produit à une vitesse plus élevée entre ladite seconde extrémité et un point central de ladite trajectoire arquée que la vitesse à laquelle elle se produit entre ladite première extrémité et un point central de ladite trajectoire arquée.

6. Moteur (1) selon l'une quelconque des revendications 1 à 5, dans lequel ledit rideau (CT) s'étend sur toute la profondeur de la dépression définie par ledit pare-flamme (8 ; 8A, 8B).

7. Moteur (1) selon l'une quelconque des revendications 1 à 5, dans lequel ledit rideau (CT) s'étend sur une partie de la profondeur de la dépression définie par ledit pare-flamme (8C).

8. Moteur (1) selon l'une quelconque des revendications précédentes, comprenant en outre un injecteur d'hydrogène (16) agencé dans une position entre ledit premier conduit d'admission (5) et ledit second conduit d'admission (5), et une bougie d'allumage (SP) agencée dans une position centrale par rapport audit cylindre (2), ledit injecteur ayant un axe longitudinal (AI) de préférence incliné d'un angle de 40° ou plus par rapport à la surface d'accouplement (HD) de ladite culasse (3).
